# EUROPÄISCHE PATENTSCHRIFT

(11) **EP 1 030 408 B1**
(45) Veröffentlichungstag und Bekanntmachung des Hinweises auf die Patenterteilung: **25.01.2006**
(21) Anmeldenummer: 00102644.2
(22) Anmeldetag: 08.02.2000
(51) Int. Cl.: H01R 13/639, H01R 13/627

(54) **Trägersystem**
Support system
Système de support

(30) Priorität: 16.02.1999 DE 19906446
(43) Veröffentlichungstag der Anmeldung: 23.08.2000
(73) Patentinhaber: Delphi Technologies, Inc., Troy, MI 48007 (US)
(72) Erfinder: Eggert, Ulrich, 58256 Ennepetal (DE)
(74) Vertreter: Manitz, Finsterwald & Partner GbR

(56) Entgegenhaltungen:
- DE-U- 1 944 568
- US-A- 4 447 102

## Beschreibung

Die Erfindung betrifft ein Trägersystem mit wenigstens einem Trägerelement, das zumindest ein Außenteil und zumindest ein in das Außenteil einsetzbares Innenteil umfaßt.

Ein derartiges Trägersystem, bei dem auch ein Sicherungselement zur Sicherung des Innenteils in einer Endlage vorgesehen ist, wird in US 4,447,102 beschrieben.

Derartige Trägersysteme werden beispielsweise mit elektrischen Leitungen für Kraftfahrzeuge verbunden, wobei das Außenteil als Träger für das Innenteil dient. Außerdem können die Trägersysteme als Träger für z.B. in Kraftfahrzeugen benötigte elektrische Komponenten, z.B. Sicherungen oder Relais, verwendet werden.

Es ist das der Erfindung zugrundeliegende Problem (Aufgabe), ein Trägersystem der eingangs genannten Art zu schaffen, das ein sicheres Zusammensetzen von Außenteil und Innenteil auf möglichst einfache Weise gestattet und bei dein insbesondere ungewollte Relativbewegungen zwischen Innenteil und Außenteil verhindert werden können.

Die Lösung dieser Aufgabe erfolgt durch die Merkmale des Anspruchs 1 und insbesondere dadurch, daß das Innenteil in einer vorbestimmten Ausgangslage relativ zum Außenteil positionierbar und aus der Ausgangslage in eine vorbestimmte Endlage überführbar ist, und daß wenigstens ein Sicherungselement für das Trägerelement vorgesehen ist, mit dem das Innenteil sowohl in der Ausgangslage als auch in der Endlage sicherbar ist.

Die Erfindung gestattet es, das Innenteil des Trägerelementes in einer definierten Ausgangslage relativ zum Außenteil zu positionieren und mit dem erfindungsgemäß vorgesehenen Sicherungselement dafür zu sorgen, daß das Innenteil z.B. bei Lagerung, Transport und Einbau des Trägersystems in dieser Ausgangslage sicher verharrt. Dasselbe Sicherungselement kann erfindungsgemäß auch zur Sicherung des Innenteils in der Endlage, d.h. zur Sicherung der endgültigen Verbindung zwischen Innenteil und Außenteil, verwendet werden. Das erfindungsgemäße Sicherungselement stellt somit einen CPA (Connector Position Assurance) dar, mit dem bei einem definierten zweistufigen Zusammensetzen des Trägersystems ein Verharren des Innenteils in der jeweiligen Lage relativ zum Außenteil sichergestellt wird.

Gemäß einer bevorzugten Ausführungsform der Erfindung ist das Sicherungselement als separates Bauteil ausgebildet, das mit dem Außenteil und/oder dem Innenteil lösbar verbindbar, insbesondere verrastbar ist.

Hierdurch kann das Sicherungselement zur Sicherung des Innenteils in der Ausgangslage und der Endlage an zwei räumlich voneinander getrennten Sicherungspositionen mit dem Außenteil bzw. dem Innenteil verbunden werden. Sowohl bei in der Ausgangslage als auch in der Innenlage gesichertem Innenteil bildet das erfindungsgemäße Trägersystem somit eine gesicherte Baugruppe, die als eine Einheit z.B. gelagert und transportiert werden kann. Zur Überführung des Innenteils in die Endlage und somit zur Herstellung der endgültigen Verbindung zwischen Innenteil und Außenteil wird das Sicherungselement aus der einen Sicherungsposition entfernt, d.h. die Sicherung des Innenteils in der Ausgangslage wird aufgehoben, so daß das Innenteil in die Endlage überführt werden kann, woraufhin das Sicherungselement zur Sicherung dieser Endlage in die andere Sicherungsposition gebracht und mit dem Außenteil bzw. dem Innenteil verbunden wird.

Gemäß einem weiteren bevorzugten Ausführungsbeispiel der Erfindung ist das Innenteil sowohl in der Ausgangslage als auch in der Endlage durch das Sicherungselement gleichzeitig in zwei etwa senkrecht zueinander verlaufenden Richtungen sicherbar, wobei das Innenteil in der Ausgangslage in Einsetzrichtung und in der Endlage in einer der Einsetzrichtung entgegengesetzten Richtung durch das Sicherungselement sicherbar ist.

Diese Ausgestaltung des erfindungsgemäßen Trägersystems ist insbesondere dann von Vorteil, wenn ein Außenteil verwendet wird, das einen Aufnahmeraum für das Innenteil aufweist, und das Innenteil bezüglich zumindest einer Richtung gegenüber dem Aufnahmeraum verkürzt ist. In diesem Fall kann durch das erfindungsgemäße Sicherungselement die Bewegung des Innenteils in der der Verkürzung entsprechenden Richtung und gleichzeitig in bzw. entgegen der Einsetzrichtung verhindert werden.

Gemäß einem weiteren bevorzugten Ausführungsbeispiel der Erfindung ist das Sicherungselement zur selbstverriegelnden Koppelung mit dem Außenteil und/oder dem Innenteil ausgebildet.

Die Herstellung des gesicherten Zustands beispielsweise mittels eines als längliches Rast-/ Steck-Element ausgebildeten Sicherungselementes wird hierdurch auf besonders einfache Weise möglich, da das Sicherungselement lediglich an der entsprechenden Sicherungsposition eingesteckt zu werden braucht, wobei die Verriegelung mit dem Außenteil und/oder Innenteil automatisch erfolgt.

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. In dieser zeigt:
- Fig. 1a: eine teilgeschnittene Seitenansicht einer Ausführungsform eines erfindungsgemäßen Trägersystems mit in einer Ausgangslage befindlichem Innenteil,
- Fig. 1b: eine andere Seitenansicht des Trägersystems von Fig. 1a,
- Fig. 1c: eine Draufsicht auf das Trägersystem von Fig. 1a,
- Fig. 1d: eine Unteransicht des Trägersystems von Fig. 1a, und
- Fig. 2a-2d: Ansichten des erfindungsgemäßen Trägersystems entsprechend den Fig. 1a-1d jeweils mit in einer Endlage befindlichem Innenteil.

Das in den Figuren dargestellte erfindungsgemäße Trägersystem umfaßt ein quaderförmiges Außenteil 10 sowie ein quaderförmiges Innenteil 12, das in einen Aufnahmeraum 14 des Außenteils 10 in einer in den Figuren mit E bezeichneten Einsetzrichtung einsetzbar ist.

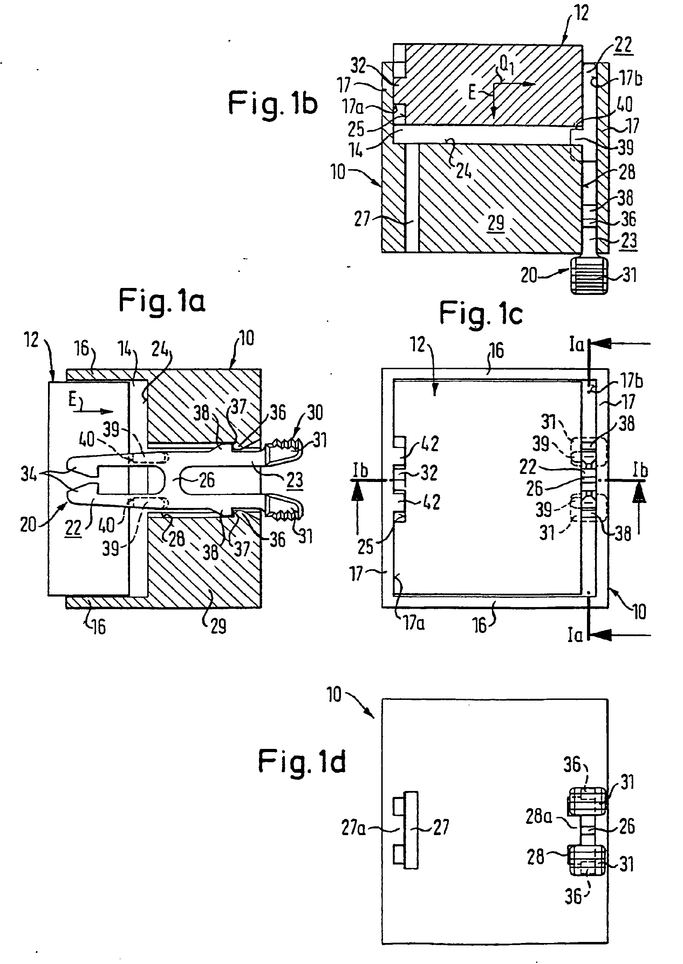

Aus Fig. 1b und 1c geht jeweils hervor, daß das Innenteil 12 bezüglich einer parallel zu den kürzeren Seitenwänden 16 verlaufenden Richtung gegenüber dem Aufnahmeraum 14 des Außenteils 10 verkürzt ist, während es zwischen die Seitenwände 16 paßgenau einschiebbar ist. In Einsetzrichtung E ist der Aufnahmeraum 14 durch einen Bodenbereich 24 begrenzt.

Durch die Verkürzung kann das Innenteil 12 im Aufnahmeraum 14 senkrecht zur Einsetzrichtung E bewegt werden. Bewegungen des Innenteils 12 relativ zum Außenteil 10 in der Ausgangslage können auch durch eine andere Formgebung des Innenteils 12 und/oder Außenteils 10 erreicht werden, wobei von der Quaderform abweichende Ausgestaltungen möglich sind.

In einem Sockel 29 des Außenteils 10 sind im Bereich der längeren Seitenwände 17 Durchgänge 27, 28 ausgebildet, die sich ausgehend von der Unterseite des Außenteils 10 durch den Sockel 29 hindurch erstrecken und in den Aufnahmeraum 14 münden.

In den Fig. 1a - 1d befindet sich das Innenteil 12 in einer Ausgangslage, in der es vom Bodenbereich 24 des Außenteils 10 beabstandet und die durch ein nachstehend näher beschriebenes Sicherungselement 20 gesichert ist.

Der Aufbau des erfindungsgemäßen Sicherungselementes 20 geht insbesondere aus Fig. 1a hervor. Sowohl ein mit dem Innenteil 12 zusammenwirkender Eingriffsabschnitt 22 als auch ein mit dem Außenteil 10 zusammenwirkender Eingriffsabschnitt 23 ist jeweils etwa U-förmig ausgebildet, wobei ein gemeinsamer Stegabschnitt 26 vorgesehen ist, von dem die U-Schenkel ausgehen. Das Sicherungselement 20 kann beispielsweise aus Kunststoff hergestellt werden und ist derart ausgeführt, daß es zumindest im Bereich der Übergänge zwischen den Schenkeln und dem Stegabschnitt 26 elastisch verformbar ist. Die den jeweiligen Eingriffsabschnitt 22, 23 bildenden Schenkel können somit auseinander- bzw. zusammengedrückt werden. Auf diese Weise ist eine selbstverriegelnde Kopplung des Sicherungselementes 20 mit dem Außenteil 10 und dem Innenteil 12 möglich. Außerdem kann aufgrund der elastischen Verformbarkeit der Eingriffsabschnitte 22, 23 die Verriegelung des Sicherungselementes 20 mit dem Innenteil 12 bzw. mit dem Außenteil 10 auf einfache Weise wieder gelöst werden. Die Koppelung bzw. Verriegelung wird nachstehend beschrieben.

Zur Sicherung des Innenteils 12 in der Ausgangslage ist das Sicherungselement 20 in den in Fig. 1b rechten Durchgang 28 des Außenteils 10 soweit eingesteckt, daß ein in den Aufnahmeraum 14 hineinragender Eingriffsabschnitt 22 zwischen der Innenwand 17b des Aufnahmeraumes 14 und dem Innenteil 12 paßgenau angeordnet ist. Am Eingriffsabschnitt 22 ausgebildete Vorsprünge 39 bilden eine parallelversetzt zum Bodenbereich 24 verlaufende Anschlagfläche 40 für das Innenteil 12.

Die Dicke des Eingriffsabschnitts 22 des Sicherungselements 20 ist somit entsprechend dem Zwischenraum zwischen Innenteil 12 und Außenteil 10 gewählt. Während der Eingriffsabschnitt 22 eine Bewegung des Innenteils in der durch den Pfeil Q₁ angedeuteten Querrichtung verhindert und das Innenteil 10 an einer Bewegung in die entgegengesetzte Richtung durch die Innenwand 17a des Aufnahmeraumes 14 gehindert ist, sorgen die Anschlagflächen 40 der Vorsprünge 39 des Sicherungselementes 20 dafür, daß das Innenteil 12 nicht weiter in Einsetzrichtung E in den Aufnahmeraum 14 eingeführt werden kann.

Nicht in den Figuren zu erkennen ist, daß das Innenteil 12 und das Außenteil 10 derart ausgebildet sind, daß das Innenteil 12 auch ohne eingestecktes Sicherungselement 20 nicht weiter in Einsetzrichtung E bewegt werden kann, solange bestimmte Kräfte nicht überschritten werden. Hierzu können beliebige Positionierungselemente wie Vorsprünge, Auflageflächen, Rippen etc. am Innenteil 12 bzw. Außenteil 10 ausgebildet sein. Diese die Ausgangslage des Innenteils 12 relativ zum Außenteil 10 zumindest bezüglich der Einsetzrichtung E festlegenden Positionierungselemente können z.B. durch Aufbringen genügend großer Kräfte oder durch Verformen des Innenteils 12 und/oder des Außenteils 10 überwunden werden, um das Innenteil 12 in die Endlage zu überführen, es sei denn, das Sicherungselement 20 befindet sich in seiner die Ausgangslage sichernden Sicherungsposition, wie es in Fig. 1a - 1d gezeigt ist. Ein versehentliches Überführen des Innenteils 12 in seine Endlage wird somit durch das Sicherungselement 20 verhindert.

Aufgrund der paßgenauen Ausführung des Innenteils 12 senkrecht zur Querrichtung Q₁ (vgl. z.B. Fig. 1c) ist in der auf diese Weise gesicherten Ausgangslage des Innenteils 12 eine Bewegung des Innenteils 12 relativ zum Außenteil 10 lediglich in einer der Einsetzrichtung E entgegengesetzten Richtung möglich, d.h. das Innenteil 12 könnte allenfalls wieder aus dem Aufnahmeraum 14 herausgenommen, jedoch nicht weiter eingeführt oder seitlich bewegt werden.

Am freien Ende der Schenkel des mit dem Innenteil 12 zusammenwirkenden Eingriffsabschnitts 22 ist jeweils an der Innenseite ein Rastabschnitt 34 ausgebildet, wobei die Rastabschnitte 34 derart abgeschrägt sind, daß sie eine V-artige Führungsaufnahme für einen Verriegelungsabschnitt 32 des Innenteils 12 bilden, der von einem zurückspringenden Bereich 25 der Außenwand des Innenteils 12 absteht.

An den Außenseiten der Schenkel des mit dem Außenteil 10 zusammenwirkenden Eingriffsabschnitts 23 des Sicherungselementes 20 ist jeweils ein in Form eines Vorsprungs vorgesehener Rastabschnitt 38 ausgebildet, der jeweils mit einem Verriegelungsabschnitt 36 des Außenteils 10 zusammenwirkt. Die Verriegelungsabschnitte 36 des Außenteils 10 sind an den schmalen Innenwänden des Durchgangs 28 ausgebildet. Sowohl die Verriegelungsabschnitte 36 des Außenteils 10 als auch die Rastabschnitte 38 des Eingriffsabschnitts 23 des Sicherungselementes 20 sind jeweils derart abgeschrägt, daß beim Einschieben des Sicherungselementes 20 in den Durchgang 28 die Schenkel des Eingriffsabschnitts 23 zunächst zusammengedrückt werden und dann beim Erreichen der zur Sicherung der Ausgangslage des Innenteils 12 erforderlichen Stellung die Rastabschnitte 38 hinter die Verriegelungsabschnitte 36 springen. Auf diese Weise ist das Sicherungselement 20 an von den Verriegelungsabschnitten 36 gebildeten Anschlagflächen 37, die parallel zum Bodenbereich 24 des Aufnahmeraumes 14 verlaufen, abgestützt, wodurch verhindert wird, daß das Sicherungselement 20 über das Innenteil 12 aus dem Durchgang 28 herausgedrückt werden kann.

Die freien Enden der Schenkel des Eingriffsabschnitts 23 sind als Griffabschnitte 31 ausgebildet, die einen Betätigungsabschnitt 30 des Sicherungselementes 20 bilden. Die Griffabschnitte 31 sind seitlich nach außen derart erweitert, daß sie einen Endanschlag des Sicherungselementes 20 bilden, durch den verhindert wird, daß das Sicherungselement 20 durch den Durchgang 28 gezogen wird. Durch das Zusammenwirken der Rastabschnitte 38 und der Griffabschnitte 31 ist das Sicherungselement 20 bei in der Ausgangslage gesichertem Innenteil 12 am Außenteil 10 verriegelt.

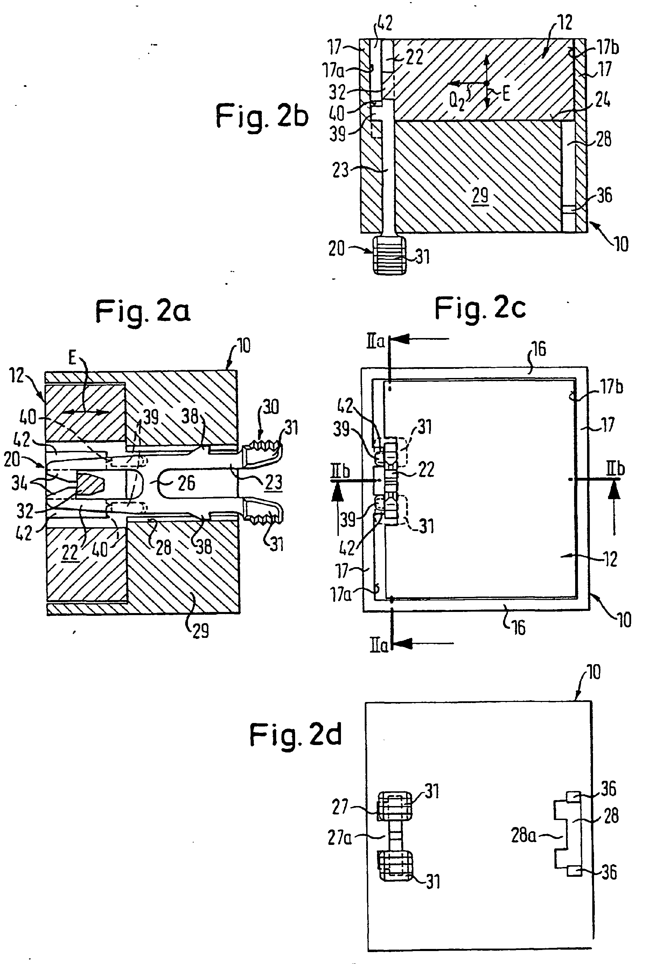

In der Draufsicht von Fig. 1c ist zum einen der Verriegelungsabschnitt 32 des Innenteils 12 zu erkennen, der in einer nachstehend in Verbindung mit den Fig. 2a - 2d beschriebenen Weise mit dem Eingriffsabschnitt 22 des Sicherungselementes 20 zusammenwirkt.

Im rechten Teil von Fig. 1c sind der Eingriffsabschnitt 22 für das Innenteil 12, der gemeinsame Steg 26 sowie die Rastabschnitte 38 des Eingriffsabschnitts 33 für das Außenteil 10 zu erkennen. Durch gestrichelte Linien sind die Griffabschnitte 31, die seitlich über die freie innere Querschnittsfläche des Durchgangs 28 herausragen, und die Vorsprünge 39 angedeutet.

Die Unteransicht des erfindungsgemäßen Trägersystems gemäß Fig. 1d zeigt insbesondere den bei in der Ausgangslage gesichertem Innenteil 12 unbenutzten Durchgang 27 im Außenteil 10 sowie die Griffabschnitte 31 und den Steg 26 des Sicherungselementes 20. Angedeutet sind außerdem die Verriegelungsabschnitte 26 im Durchgang 28 des Außenteils 10.

Die Fig. 2a - 2d zeigen das erfindungsgemäße Trägersystem bei in der Endlage gesichertem Innenteil 12, das mit seiner Unterseite am Bodenbereich 24 des Aufnahmeraumes 14 anliegt. Eine Bewegung des Innenteils 12 in Einsetzrichtung E wird hier nicht durch das Sicherungselement 20, sondern durch das Außenteil 10 selbst verhindert. An einer Bewegung in Querrichtung Q₂ (vgl. Fig. 2b), die der Querrichtung Q₁ gemäß Fig. 1b entgegengesetzt ist, ist das Innenteil 12 durch den Eingriffsabschnitt 22 des Sicherungselementes 20 gehindert, der paßgenau zwischen dem zurückspringenden Bereich 25 des Innenteils 12 und parallel zur Einsetzrichtung E verlaufenden Leisten 42 an der Innenwand 17a des Aufnahmeraumes 14 angeordnet ist.

Eine Bewegung des Innenteils 12 aus dem Aufnahmeraum 14 heraus, d.h. entgegengesetzt zur Einsetzrichtung E, ist ebenfalls nicht möglich. Insbesondere Fig. 2a zeigt, daß der Eingriffsabschnitt 22 des Sicherungselementes 20 mit seinen Rastabschnitten 34 den Verriegelungsabschnitt 32 des Innenteils 12 hintergreift. Die als Endanschlag dienenden Griffabschnitte 31 des Eingriffsabschnitts 23 verhindern, daß das Sicherungselement 20 zusammen mit dem Innenteil 12 entgegen der Einsetzrichtung E durch den Durchgang 27 gezogen wird. Hierfür sorgen auch die Leisten 42, die den Vorsprüngen 39 des Sicherungselementes 20 bei einer Bewegung entgegen der Einsetzrichtung E im Wege wären.

Die Draufsicht von Fig. 2c zeigt insbesondere den nunmehr zwischen der Innenwand 17a und dem Innenteil 12 vorhandenen Zwischenraum sowie den zwischen den Leisten 42 und dem zurückspringenden Bereich 25 angeordneten Eingriffsabschnitt 22 des Sicherungselementes 20.

In Fig. 2d sind insbesondere die Griffabschnitte 31 sowie der Querschnitt des bei in der Endlage gesichertem Innenteils 12 unbenutzten Durchgangs 28 zu erkennen, an dessen schmalen Innenflächen die Verriegelungsabschnitte 36 ausgebildet sind.

Der etwa C-förmige Querschnitt beider Durchgänge 27, 28 im Außenteil 10 wird durch parallel zur Einsetzrichtung E verlaufende Führungsleisten 27a, 28a mitbestimmt, die sich beim Einstecken des Sicherungselementes 20 zwischen den Vorsprüngen 39 befinden und für eine Ausrichtung des länglichen Sicherungselementes 20 in Einsetzrichtung E sorgen.

In den Figuren nicht dargestellt sind parallel zur Einsetzrichtung E verlaufende, zusätzlich zu den Sicherungselement-Durchgängen 27, 28 vorgesehene Durchgänge im Außenteil 10 und im Innenteil 12, die bei in der Ausgangslage befindlichem Innenteil 12 derart miteinander ausgerichtet sind, daß mit Leitungsenden verbundene Anschlußelemente, z.B. Kabelschuhe, durch das Außenteil 10 hindurch und in das Innenteil 12 hinein gesteckt werden können. Das Innenteil 12 ist derart ausgebildet, daß diese Anschlußelemente mittels einer Erstverriegelung im sich in der Ausgangslage befindenden Innenteil 12 verriegelt werden.

Zum Zusammensetzen von Innenteil 12 und Außenteil 10 des erfindungsgemäßen Trägersystems wird das Innenteil 12 in Einsetzrichtung E in den Aufnahmeraum 14 eingeführt, bis es sich in der durch die vorstehend erwähnten Positionierungselemente festgelegten Ausgangslage befindet. Anschließend wird das Sicherungselement 20 in den Durchgang 28 gesteckt, bis es mit seinen Rastabschnitten 38 an den Verriegelungsabschnitten 36 des Durchgangs 28 einrastet und die Anschlagflächen 40 der Vorsprünge 39 nahe der Unterseite des Innenteils 12 angeordnet sind oder an der Unterseite zur Anlage kommen. In dieser nunmehr gesicherten Ausgangslage ist eine Weiterbewegung des Innenteils 12 in Einsetzrichtung E auch dann nicht möglich, wenn zur Überwindung der Positionierungselemente ausreichende Kräfte aufgebracht werden. Außerdem ist das Innenteil 12 durch das Sicherungselement 20 an Bewegungen senkrecht zur Einsetzrichtung E gehindert.

Um zur Herstellung der endgültigen Verbindung zwischen Innenteil 12 und Außenteil 10 das Innenteil 12 aus seiner stabilen Ausgangslage in die Endlage zu überführen, wird das Sicherungselement 20 durch Zusammendrücken der Schenkel des Eingriffsabschnitts 23 an den Griffabschnitten 31 aus dem Durchgang 28 herausgezogen. Das Innenteil 12 kann dann weiter in Einsetzrichtung E und in Querrichtung Q₁ bewegt werden, wobei diese Relativbewegung zwischen Innenteil 12 und Außenteil 10 beispielsweise dazu benutzt werden kann, elektrische und/oder mechanische Verbindungen, die als eine Zweitverriegelung dienen, zwischen den beiden Teilen herzustellen.

Wenn das Innenteil 12 mit seiner Unterseite am Bodenbereich 24 des Aufnahmeraumes 14 anliegt, wird das Sicherungselement 20 in den anderen Durchgang 27 gesteckt, wobei aufgrund der glatten Innenflächen des Durchgangs 27 keine Verrastung mit dem Außenteil 10, sondern über den Eingriffsabschnitt 22 mit dem Verriegelungsabschnitt 32 des Innenteils 12 erfolgt. Das Innenteil 12 ist nunmehr in seiner Endlage gesichert.

Zum Lösen der Sicherung werden die Schenkel des Eingriffsabschnitts 22 von Hand oder mittels eines geeigneten Werkzeugs auseinandergedrückt. Sowohl das Innenteil 12 als auch das Sicherungselement 20 können dann entnommen werden.-.-.-.Delphi Technologies Inc.

### Bezugszeichenliste

- 10: Außenteil
- 12: Innenteil
- 14: Aufnahmeraum
- 16, 17: Seitenwände
- 17a, 17b: Innenwände
- 20: Sicherungselement
- 22: Eingriffsabschnitt für Innenteil
- 23: Eingriffsabschnitt für Außenteil
- 24: Bodenbereich
- 25: zurückspringender Bereich
- 26: Stegabschnitt
- 27, 28: Durchgänge im Außenteil
- 27a, 28a: Führungsleisten
- 29: Sockel
- 30: Betätigungsabschnitt
- 31: Griffabschnitte
- 32: Verriegelungsabschnitt des Innenteils
- 34: Rastabschnitte des Innenteil-Eingriffsabschnitts
- 36: Verriegelungsabschnitte des Außenteils
- 37: Anschlagflächen
- 38: Rastabschnitte des Außenteil-Eingriffsabschnitts
- 39: Vorsprünge
- 40: Anschlagflächen
- 42: Leisten

- E: Einsetzrichtung
- Q₁, Q₂: Querrichtungen

## Patentansprüche

1. Trägersystem mit wenigstens einem Trägerelement, das zumindest ein Außenteil (10) und zumindest ein in das Außenteil (10) einsetzbares Innenteil (12) umfaßt, welches in einer vorbestimmten Ausgangslage relativ zum Außenteil (10) positionierbar und aus der Ausgangslage in eine vorbestimmte Endlage überführbar ist, und mit wenigstens einem Sicherungselement (20) für das Trägerelement **dadurch gekennzeichnet, dass** mit dem Sicherungselement, das Innenteil (12) sowohl in der Ausgangslage als auch in der Endlage sicherbar ist.

2. Trägersystem nach Anspruch 1,
**dadurch gekennzeichnet, daß** das Sicherungselement (20) als separates Bauteil ausgebildet ist, das mit dem Außenteil (10) und/oder dem Innenteil (12) lösbar verbindbar, insbesondere verrastbar ist.

3. Trägersystem nach Anspruch 1 oder 2,
**dadurch gekennzeichnet, daß** zur Sicherung des Innenteils (12) in der Ausgangslage und der Endlage wenigstens zwei verschiedene, insbesondere räumlich voneinander getrennte Sicherungspositionen für das Sicherungselement (20) vorgesehen sind, wobei bevorzugt das Innenteil (12) und/oder das Außenteil (10) jeweils an den Sicherungspositionen unterschiedlich ausgebildet sind.

4. Trägersystem nach zumindest einem der vorhergehenden Ansprüche,
**dadurch gekennzeichnet, daß** das Innenteil (12) in der Ausgangslage und/oder Endlage durch das Sicherungselement (20) gleichzeitig in wenigstens zwei bevorzugt etwa senkrecht zueinander verlaufenden Richtungen sicherbar ist.

5. Trägersystem nach zumindest einem der vorhergehenden Ansprüche,
**dadurch gekennzeichnet, daß** das Sicherungselement (20) zur selbstverriegelnden Koppelung mit dem Außenteil (10) und/ oder dem Innenteil (12) ausgebildet ist.

6. Trägersystem nach zumindest einem der vorhergehenden Ansprüche,
**dadurch gekennzeichnet, daß** das Sicherungselement (20) in Form eines länglichen Rast-/ Steck-Elementes vorgesehen ist.

7. Trägersystem nach zumindest einem der vorhergehenden Ansprüche,
**dadurch gekennzeichnet, daß** das Sicherungselement (20) zwei jeweils etwa U-förmig ausgebildete Eingriffsabschnitte (22, 23) mit einem gemeinsamen Stegabschnitt (26) aufweist.

8. Trägersystem nach zumindest einem der vorhergehenden Ansprüche,
**dadurch gekennzeichnet, daß** die Schenkel eines mit dem Innenteil (12) zusammenwirkenden, etwa U-förmigen Eingriffsabschnitts (22) des Sicherungselementes (20) gegen eine Rückstellkraft auseinanderdrückbar sind.

9. Trägersystem nach Anspruch 8,
**dadurch gekennzeichnet, daß** auf der Innenseite zumindest eines der Schenkel wenigstens ein mit dem Innenteil (12), insbesondere mit einem vorsprungartig ausgebildeten Verriegelungsabschnitt (32) des Innenteils (12), zusammenwirkender Rastabschnitt (34) ausgebildet ist, wobei bevorzugt der Verriegelungsabschnitt (32) an einem zurückspringenden Bereich (25) einer Außenwand des Innenteils (12) ausgebildet ist.

10. Trägersystem nach zumindest einem der vorhergehenden Ansprüche,
**dadurch gekennzeichnet, daß** die Schenkel eines mit dem Außenteil (10) zusammenwirkenden, etwa U-förmigen Eingriffsabschnitts (23) des Sicherungselementes (20) gegen eine Rückstellkraft zusammendrückbar sind.

11. Trägersystem nach Anspruch 10,
**dadurch gekennzeichnet, daß** auf der Außenseite zumindest eines der Schenkel wenigstens ein mit dem Außenteil (10), insbesondere mit einem von der Innenwand eines im Außenteil (10) ausgebildeten Durchgangs (28) für das Sicherungselement (20) abstehenden Verriegelungsabschnitt (36), zusammenwirkender Rastabschnitt (38) ausgebildet ist.

12. Trägersystem nach zumindest einem der vorhergehenden Ansprüche,
**dadurch gekennzeichnet, daß** das Sicherungselement (20) wenigstens einen Betätigungsabschnitt (30) zur elastischen Verformung eines insbesondere mit dem Außenteil (10) zusammenwirkenden Eingriffsabschnitts (23) des Sicherungselementes (20) aufweist, wobei bevorzugt der Betätigungsabschnitt (30) bei gesichertem Innenteil (12) vom Innenteil (12) und/oder Außenteil (10) absteht, insbesondere aus einem im Außenteil (10) ausgebildeten Durchgang (27, 28) für das Sicherungselement (20) herausragt.

13. Trägersystem nach zumindest einem der vorhergehenden Ansprüche,
**dadurch gekennzeichnet, daß** ein Betätigungsabschnitt (30) des Sicherungselementes (10) als Endanschlag ausgebildet ist, durch den das Sicherungselement (20) bei insbesondere sowohl in der Ausgangslage als auch in der Endlage gesichertem Innenteil (12) an einer der Einsetzrichtung (E) entgegengesetzten Bewegung gehindert ist.

14. Trägersystem nach zumindest einem der vorhergehenden Ansprüche,
**dadurch gekennzeichnet, daß** das Außenteil (12) wenigstens einen Aufnahmeraum (14) für das Innenteil (10) aufweist, in den bei gesichertem Innenteil (10) zumindest ein Eingriffsabschnitt (22) des Sicherungselementes (20) hineinragt.

15. Trägersystem nach zumindest einem der vorhergehenden Ansprüche,
**dadurch gekennzeichnet, daß** bei in der Ausgangslage gesichertem Innenteil (12) das Sicherungselement (20) am Außenteil (10), insbesondere an wenigstens einer bevorzugt etwa senkrecht zur Einsetzrichtung (E) verlaufenden Anschlagfläche (37) des Außenteils (10), abgestützt ist.

16. Trägersystem nach zumindest einem der vorhergehenden Ansprüche,
**dadurch gekennzeichnet, daß** das Sicherungselement (20) zur Sicherung des Innenteils (12) in wenigstens einen im Außenteil (10) ausgebildeten und bevorzugt in einen Aufnahmeraum (14) des Außenteils (10) mündenden Durchgang (27, 28) einsteckbar ist.

17. Trägersystem nach zumindest einem der vorhergehenden Ansprüche,
**dadurch gekennzeichnet, daß** bei in der Ausgangslage gesichertem Innenteil (12) das Innenteil (12) und das Außenteil (10) in Einsetzrichtung (E) beabstandet sind, wobei insbesondere zwischen dem Innenteil (12) und einem Bodenbereich (24) eines Aufnahmeraumes (14) des Außenteils (10) ein Zwischenraum vorhanden ist.

18. Trägersystem nach zumindest einem der vorhergehenden Ansprüche,
**dadurch gekennzeichnet, daß** das Innenteil (12) in der Endlage paßgenau zwischen einem Bodenbereich (24) eines Aufnahmeraumes (14) des Außenteils (10) und einem mit dem Innenteil (12) zusammenwirkenden Eingriffsabschnitt (22) des Sicherungselementes (20) positioniert ist.

19. Trägersystem nach zumindest einem der vorhergehenden Ansprüche,
**dadurch gekennzeichnet, daß** das Innenteil (12) gegenüber einem Aufnahmeraum (14) des Außenteils (10) zumindest bezüglich einer Richtung verkürzt und das Sicherungselement (20), insbesondere ein in den Aufnahmeraum (14) hineinragender Eingriffsabschnitt (22) des Sicherungselementes (20), bei in der Ausgangslage und/oder Endlage gesichertem Innenteil (12) paßgenau zwischen dem Innenteil (12) und dem Außenteil (10) angeordnet ist.

20. Trägersystem nach zumindest einem der vorhergehenden Ansprüche,
**dadurch gekennzeichnet, daß** das Außenteil (10) und das Innenteil (12) jeweils zumindest im wesentlichen etwa quaderförmig ausgebildet sind und das Außenteil (10) im Bereich von zwei gegenüberliegenden Seitenwänden (17) jeweils mit einem sich etwa parallel zur Einsetzrichtung (E) erstreckenden und in einen Aufnahmeraum (14) für das Innenteil (12) mündenden Durchgang (27, 28) für das Sicherungselement (20) versehen ist.

## Claims

1. A carrier system with at least one carrier element having at least one outer part (10) and at least one inner part (12) which is insertable into the outer part (10) and which can be positioned in a predetermined starting position relative to the outer part (10) and which can be transferred from the starting position into a predetermined final position, and having at least one securing element (20) for the carrier element, **characterized in that** the inner part (12) can be secured by the securing element both in the starting position and in the final position.

2. A carrier system in accordance with claim 1, **characterized in that** the securing element (20) is designed as a separate component which can be releasably connected, in particular latched, to the outer part (10) and/or to the inner part (12).

3. A carrier system in accordance with claim 1 or claim 2, **characterized in that**, for the securing of the inner part (12) in the starting position and in the final position, at least two different securing positions, which are in particular spatially separated from one another, are provided for the securing element (20), with the inner part (12) and/or the outer part (10) preferably in each case being formed differently at the securing position.

4. A carrier system in accordance with at least one of the preceding claims, **characterized in that** the inner part (12) can be secured in the starting position and/or in the final position by the securing element (20) in at least two directions at the same time, which preferably extend approximately perpendicular to one another.

5. A carrier system in accordance with at least one of the preceding claims, **characterized in that** the securing element (20) is designed the self locking coupling with the outer part (10) and/or with the inner part (12).

6. A carrier system in accordance with at least one of the preceding claims, **characterized in that** the securing element (20) is provided in the form of an elongate latch/plug element.

7. A carrier system in accordance with at least one of the preceding claims, **characterized in that** the securing element (20) has two engagement sections (22, 23) which are in each case designed approximately in U shape and have a common web section (26).

8. A carrier system in accordance with at least one of the preceding claims, **characterized in that** the limbs of an approximately U-shaped engagement section (22) of the securing element (20) which cooperates with the inner part (12) can be pressed apart against a restoring force.

9. A carrier system in accordance with claim 8, **characterized in that** at least one latching section (34), which cooperates with the inner part (12), in particular with a locking section (32) of the inner part (12) which is designed in the manner of a projection, is formed at the inner side of at least one of the limbs, with the locking section (32) preferably being formed at a retracting region (25) of an outer wall of the inner part (12).

10. A carrier system in accordance with at least one of the preceding claims, **characterized in that** the limbs of an approximately U-shaped engagement section (23) of the securing element (20) which cooperates with the outer part (10) can be pressed together against a restoring force.

11. A carrier system in accordance with claim 10, **characterized in that** at the outer side of at least one of the limbs at least one latching section (38) is formed which cooperates with the outer part (10), in particular with a locking section (36) which projects from the inner wall of a passage (28) for the securing element (20) which is formed in the outer part (10).

12. A carrier system in accordance with at least one of the preceding claims, **characterized in that** the securing element (20) has at least one actuation section (30) for the elastic deformation of an engagement section (23) of the securing element (20) which in particular cooperates with the outer part (10), with the actuation section (30) preferably projecting from the inner part (12) and/or the outer part (10) when the inner part (12) is secured, in particular protruding out of a passage (27, 28) for the securing element (20) formed in the outer part (10).

13. A carrier system in accordance with at least one of the preceding claims, **characterized in that** an actuation section (30) of the securing element (10) is designed as an end abutment by which the securing element (20) is hindered from a movement opposite to the insertion direction (E) when the inner part (12) is secured in particular both in the starting position and in the final position.

14. A carrier system in accordance with at least one of the preceding claims, **characterized in that** the outer part (12) has at least one reception space (14) for the inner part (10) into which at least one engagement section (22) of the securing element (20) protrudes when the inner part (10) is secured.

15. A carrier system in accordance with at least one of the preceding claims, **characterized in that**, when the inner part (12) is secured in the starting position, the securing element (20) is supported at the outer part (10), in particular at at least an abutment surface (37) of the outer part (10) which preferably extends approximately perpendicularly to the insertion direction (E).

16. A carrier system in accordance with at least one of the preceding claims, **characterized in that**, for the securing of the inner part (12), the securing element (20) can be plugged into at least one passage (27, 28) which is formed in the outer part (10) and which preferably opens into a reception space (14) of the outer part (10).

17. A carrier system in accordance with at least one of the preceding claims, **characterized in that**, when the inner part (12) is secured in the starting position, the inner part (12) and the outer part (10) are spaced apart in the insertion direction (E), with in particular an intermediate space being present between the inner part (12) and a base region (24) of a reception space (14) of the outer part (10).

18. A carrier system in accordance with at least one of the preceding claims, **characterized in that** the inner part (12) is positioned in the final position with an exact fit between a base region (24) of a reception space (14) of the outer part (10) and an engagement section (22) of the securing element (20) cooperating with the inner part (12).

19. A carrier system in accordance with at least one of the preceding claims, **characterized in that** the inner part (12) is shortened with respect to a reception space (14) of the outer part (10) at least with respect to one direction and the securing element (20), in particular an engagement section (22) of the securing element (20) protruding into the reception space (14), is arranged with an exact fit between the inner part (12) and the outer part (10) when the inner part (12) is secured in the starting position and/or final position.

20. A carrier system in accordance with at least one of the preceding claims, **characterized in that** the outer part (10) and the inner part (12) are in each case designed at least substantially approximately in the shape of a right parallelepiped, and the outer part (10) is provided in the region of two oppositely disposed side walls (17) in each case with a passage (27, 28) for the securing element (20) which extends approximately parallel to the insertion direction (E) and which opens into a reception space (14) for the inner part (12).

## Revendications

1. Système de support comportant au moins un élément de support, qui comprend au moins une partie extérieure (10) et au moins une partie intérieure (12) pouvant être insérée dans la partie extérieure (10) et qui peut être positionnée dans une position de départ prédéterminée par rapport à la partie extérieure (10) et peut être transférée de la position de départ dans une position finale prédéterminée, et comportant au moins un élément de blocage (20) pour l'élément de support, **caractérisé en ce que** la partie intérieure (12) peut être bloquée par l'élément de blocage aussi bien dans la position de départ que dans la position finale.

2. Système de support selon la revendication 1, **caractérisé en ce que** l'élément de blocage (20) est agencé sous la forme d'un composant séparé, qui peut être relié de façon amovible, notamment par encliquetage, à la partie extérieure (10) et/ou à la partie intérieure (12).

3. Système de support selon la revendication 1 ou 2, **caractérisé en ce que** pour le blocage de la partie intérieure (12) dans la position de départ et dans la position finale, au moins deux positions différentes de blocage, notamment séparées l'une de l'autre dans l'espace, sont prévues pour l'élément de blocage (20), la partie intérieure (12) et/ou la partie extérieure (10) étant agencées de préférence différemment dans les positions de blocage.

4. Système de support selon au moins l'une des revendications précédentes,
**caractérisé en ce que** dans la position de départ et/ou dans la position d'extrémité, la partie intérieure (12) peut être bloquée par l'élément de blocage (20) simultanément dans au moins deux directions qui sont de préférence approximativement perpendiculaires entre elles.

5. Système de support selon au moins l'une des revendications précédentes,
**caractérisé en ce que** l'élément de blocage (20) est agencé pour établir un couplage, avec verrouillage automatique, avec la partie extérieure (10) et/ou la partie intérieure (12).

6. Système de support selon au moins l'une des revendications précédentes,
**caractérisé en ce que** l'élément de blocage (20) est prévu sous la forme d'un élément allongé d'encliquetage / d'enfichage.

7. Système de support selon au moins l'une des revendications précédentes,
**caractérisé en ce que** l'élément de blocage (20) comporte deux sections d'engagement (22,23) réalisées respectivement approximativement en forme de U et possédant une section de barre commune (26).

8. Système de support selon au moins l'une des revendications précédentes,
**caractérisé en ce que** les branches d'une section d'engagement approximativement en forme de U (22), qui coopère avec la partie intérieure (12), de l'élément de blocage (20) peuvent être repoussées l'une à partir de l'autre à l'encontre d'une force de rappel.

9. Système de support selon la revendication 8,
**caractérisé en ce que** sur le côté intérieur d'au moins l'une des branches est formée au moins une section d'encliquetage (34), qui coopère avec la partie intérieure (12), notamment avec une section de verrouillage en forme de partie saillante (32) de la partie intérieure (12), la section de verrouillage (32) étant formée de préférence dans une partie en retrait (25) d'une paroi extérieure de la partie intérieure (12).

10. Système de support selon au moins l'une des revendications précédentes,
**caractérisé en ce que** les branches d'une section d'engagement approximativement en forme de U (23), qui coopère avec la partie extérieure (10), de l'élément de blocage (20) peuvent être serrées entre elles à l'encontre d'une force de rappel.

11. Système de support selon la revendication 10,
**caractérisé en ce que** sur la face extérieure d'au moins l'une des branches est formée au moins une section d'encliquetage (38) qui coopère avec la partie extérieure (10), notamment avec une section de verrouillage (36) qui fait saillie à partir de la paroi intérieure d'un passage (28), réalisé dans la partie extérieure (10), pour l'élément de blocage (20).

12. Système de support selon l'une des revendications précédentes,
**caractérisé en ce que** l'élément de blocage (20) comporte au moins une section d'actionnement (30) pour la déformation élastique d'une section d'engagement (23) de l'élément de blocage (20), qui coopère notamment avec la partie extérieure (10), la section d'actionnement (30) faisant de préférence saillie, lorsque la partie intérieure (12) est bloquée, à partir de la partie intérieure (12) et/ou à partir de la partie extérieure (10), et notamment ressort d'un passage (27,28), formé dans la partie extérieure (10), pour l'élément de blocage (20).

13. Système de support selon au moins l'une des revendications précédentes,
**caractérisé en ce qu'**une section d'actionnement (30) de l'élément de blocage (10) est agencée sous la forme d'une butée d'extrémité, qui empêche l'élément de blocage (20) d'exécuter un déplacement en sens opposé de la direction d'insertion (E), lorsque notamment la partie intérieure (12) est bloquée aussi bien dans la position de départ que dans la position finale.

14. Système de support selon au moins l'une des revendications précédentes,
**caractérisé en ce que** la partie extérieure (12) comporte au moins un espace de logement (14) pour la partie intérieure (10), dans lequel, lorsque la partie intérieure (10) est bloquée, au moins une section d'engagement (22) de l'élément de blocage (20) pénètre.

15. Système de support selon au moins l'une des revendications précédentes,
**caractérisé en ce que**, lorsque la partie intérieure (12) est bloquée dans la position de départ, l'élément de blocage (20) en appui sur la partie extérieure (10), notamment sur au moins une surface de butée (37) de la partie extérieure (10), qui s'étend de préférence approximativement perpendiculairement à la direction d'insertion (E).

16. Système de support selon au moins l'une des revendications précédentes,
**caractérisé en ce que** l'élément de blocage (20) peut être enfiché, pour le blocage de la partie intérieure (12), dans au moins un passage (27,28) qui est formé dans la partie extérieure (10) et débouche de préférence dans un espace de logement (14) de la partie extérieure (10).

17. Système de support selon au moins l'une des revendications précédentes,
**caractérisé en ce que**, dans le cas où la partie intérieure (12) est bloquée dans la position de départ, la partie intérieure (12) et la partie extérieure (10) sont distantes dans la direction d'insertion (E), un espace intercalaire étant présent notamment entre la partie intérieure (12) et une zone de fond (24) de l'espace de logement (14) de la partie extérieure (10).

18. Système de support selon au moins l'une des revendications précédentes,
**caractérisé en ce que** la partie intérieure (12) est positionnée dans la position finale d'une manière adaptée de façon précise entre une zone de fond (24) d'un espace de logement (14) de la partie extérieure (10) et une section d'engagement (22) de l'élément de blocage (20), qui coopère avec la partie intérieure (12).

19. Système de support selon au moins l'une des revendications précédentes,
**caractérisé en ce que** la partie intérieure (12) est raccourcie par rapport à l'espace de logement (14) de la partie extérieure (10) au moins dans une direction et que l'élément de blocage (20), notamment une section d'engagement (22) de l'élément de blocage (20), qui pénètre dans l'espace de logement (14), est disposé d'une manière adaptée de façon précise entre la partie intérieure (12) et la partie extérieure (10), lorsque la partie intérieure (12) est bloquée dans la position de départ et/ou dans la position finale.

20. Système de support selon au moins l'une des revendications précédentes,
**caractérisé en ce que** la partie extérieure (10) et la partie intérieure (12) sont formées respectivement au moins essentiellement avec une forme parallélépipédique et que la partie extérieure (10) est équipée, dans la zone de deux parois latérales opposées (17), respectivement d'un passage (27,28) pour l'élément de blocage (20), qui s'étend approximativement parallèlement à la direction d'insertion (E) et débouche dans un espace de logement (14) pour la partie intérieure (12).
